# EUROPÄISCHE PATENTSCHRIFT

(11) **EP 1 341 694 B1**
(45) Veröffentlichungstag und Bekanntmachung des Hinweises auf die Patenterteilung: **19.05.2004**
(21) Anmeldenummer: 01270459.9
(22) Anmeldetag: 05.12.2001
(51) Int. Cl.: B63H 21/20

(54) **HYBRIDANTRIEB FÜR SCHIFFE**
HYBRID SHIP PROPULSION SYSTEM
SYSTEME DE PROPULSION HYBRIDE POUR BATEAUX

(30) Priorität: 11.12.2000 DE 10061578
(43) Veröffentlichungstag der Anmeldung: 10.09.2003
(73) Patentinhaber: SIEMENS AKTIENGESELLSCHAFT, 80333 München (DE)
(72) Erfinder: ANDERSEN, Peter, 21075 Hamburg (DE); RZADKI, Wolfgang, 21509 Glinde (DE)
(86) Internationale Anmeldenummer: PCT/DE2001/004556
(87) Internationale Veröffentlichungsnummer: WO 2002/047974

(56) Entgegenhaltungen:
- EP-A- 0 217 049
- DE-U- 29 604 437
- US-A- 5 616 056
- "BOOSTER DRIVE 'ADDS ANOTHER CYLINDER'" MOTORSHIP, THE, REED BUSINESS INFORMATION LTD, SUTTON, GB, Bd. 80, Nr. 952, November 1999 (1999-11), Seite 25 XP000877915 ISSN: 0027-2001

## Beschreibung

Das Antriebssystem für große Cargoschiffe, beispielsweise Containerschiffe, sieht üblicherweise pro Schiffspropeller einen langsamlaufenden Dieselmotor vor, der die gesamte Antriebsleistung für diesen Propeller liefert. Die Antriebsleistung des Dieselmotors beginnt um die 10 bis 15 MW. Die verwendeten Dieselmotoren arbeiten nach dem Zweitaktprinzip. Die hohe geforderte Leistung und die niedrige Nenndrehzahl bedingen einen großen Hubraum und somit ein großes Bauvolumen bei großer Masse.

Ein entsprechend großer Raum muss im Schiffsrumpf für den Dieselmotor oder, bei Mehrwellenantrieb, die Dieselmotoren bereit gestellt werden, und zwar an einer Stelle, die bezogen auf die Gesamtlänge nahe dem Heck liegt. Der Maschinenraum befindet sich an einer Stelle, die zum Laden von Containern an sich besonders gut geeignet wäre. Er weist auch viel ungenutzten Totraum auf.

Das hohe Gewicht des Dieselmotors bedingt eine beachtliche Verstärkung des Rumpfs an den betreffenden Stellen.

Wie bei allen Brennkraftmaschinen ändert sich auch bei Schiffsdieselmotoren der relative Treibstoffverbrauch abhängig vom Betriebspunkt, d.h. von der Drehzahl. Der hinsichtlich des Treibstoffverbrauch günstigste Drehzahlbereich liegt bei etwa 85 bis 90 % der Nenndrehzahl, für die der Dieselmotor ausgelegt ist. Bei Drehzahlen die niedriger sind, ist der Treibstoffverbrauch ungünstiger. Der Schiffsführer muss deswegen das Antriebssystem möglichst nahe bei diesem Betriebspunkt halten.

Mit Hilfe von Verstellpropellern, bei denen der Winkel der Blätter des Schiffspropellers drehmomentabhängig verstellt werden kann, besteht eine gewisse Möglichkeit den Betriebspunkt auch bei ungünstigen Lastsituationen in Richtung auf günstigeren Treibstoffverbrauch zu verlagern. Dennoch kann nicht bei allen Fahrbedingungen der optimale Betriebspunkt erreicht werden.

Neben dem ungünstigen Treibstoffverbrauch bei Drehzahlen kleiner als der Nenndrehzahl, treten bei niedrigen Drehzahlen, wie sie im unteren Fahrgeschwindigkeitsbereich beim Beschleunigen des Schiffes erforderlich sind, auch erhebliche thermische Belastungen auf. Zum Beschleunigen des Schiffes muss der Dieselmotor bei niedriger Drehzahl ein hohes Drehmoment abgeben, d.h. er läuft bei niedriger Drehzahl mit großer Zylinderfüllung. Entsprechend hoch ist die thermische Belastung der Zylinderköpfe.

Trotz all dieser Nachteile wird der Schiffsdieselmotor bei Containerschiffen fast ausschließlich eingesetzt, weil er in den Gestehungskosten sehr günstig ist. Der Dieselmotor ist robust und kann in Billiglohnländern gefertigt werden, was die Herstellungskosten senkt.

Neben dem Dieselantrieb für Schiffe ist es aus der Praxis auch bekannt, Elektromotoren zum Antrieb des Schiffspropellers zu verwenden. Die elektrische Energie für den Propellermotor wird mit Hilfe einer Dieselgeneratoranlage erzeugt. Hier können schnelllaufende Viertaktdieselmotoren verwendet werden, die ein wesentlich günstigeres Leistungsgewicht als langsamlaufende Dieselmotoren haben. Ihre Drehzahl liegt um ca. den Faktor 4 - 10 über der Drehzahl des Dieselmotors für den Schiffspropeller.

Außerdem besteht die Möglichkeit unter Verwendung von auf Halbleitern basierenden Stromrichtern den Dieselmotor der Dieselgeneratoranlage unabhängig von der Belastung immer mit jener Drehzahl zu betreiben, bei der der Treibstoffverbrauch bezogen auf die abgegebene Leistung optimal ist.

Thermische Probleme wegen niedriger Drehzahl und hoher Zylinderfüllung können bei diesem Antriebskonzept vermieden werden.

Den erheblichen Vorteilen des elektrischen Antriebssystems stehen vergleichsweise hohe Investitionen gegenüber, die deutlich höher sind als die Aufwendungen für einen Dieselmotor zum unmittelbaren Antrieb des Schiffspropellers.

Schließlich ist aus der Praxis ein Mischantrieb bekannt, der als Hauptantrieb einen langsam laufenden Dieselmotor für den Schiffspropeller vorsieht. Zusätzlich wird als Booster ein vergleichsweise kleiner Elektromotor mit der Propellerwelle gekuppelt. Die Leistung des Elektromotors beträgt höchstens 10% des Dieselmotors. Der Boostermotor wird insbesondere im niedrigen Drehzahlbereich eingesetzt um eine thermische Überlastung des Hauptantriebsdiesels zu vermeiden. Außerdem ist es Zweck des Boostermotors die Regelungsdynamik zu verbessern, beispielsweise in Betriebssituationen, wenn der Propeller wegen schwerer See teilweise aus dem Wasser auf- und wieder eintaucht. Ein derartiger Schiffsbetriebsystem ist zB. aus US-A-5 616 056 bekannt.

Ausgehend hiervon ist es Aufgabe der Erfindung ein Schiffsantriebssystem zu schaffen, das gegenüber den bekannten Systemen insgesamt ökonomischer ist, und zwar unter dem Gesichtspunkt des Treibstoffverbrauches im Betrieb, des zur Verfügung stehenden Nutzraums sowie dem Investitionsaufwand für den Schiffsrumpf und den Antrieb beim Bau des Schiffs sowie.

Diese Aufgabe wird erfindungsgemäß mit dem Schiffsantriebssystem nach Anspruch 1 gelöst.

Bei dem erfindungsgemäßen Schiffsantriebssystem wird die Kombination aus elektrischem und Dieselantrieb für den Schiffspropeller verwendet. Der Elektromotor ist verhältnismäßig stark dimensioniert und übernimmt einen nennenswerten Anteil des gesamten Propellerdrehmoments gemessen an dem Drehmoment, das der Dieselmotor liefert. Gleichwohl ist die elektrische Leistung des Elektromotors insgesamt gesehen noch relativ klein, wodurch sich die Investitionen niedrig halten lassen, verglichen mit einem Antriebssystem, das ausschließlich mit Elektromotoren arbeitet.

Der Elektromotor ersetzt gleichsam einen oder mehrere Zylinder des langsam laufenden Dieselmotors, der entsprechen kürzer und leichter wird, verglichen mit einem Schiff, bei dem dieselbe Antriebsleitung ausschließlich von einem langsamlaufenden Dieselmotor stammt. Die Volumen- und Massenreduktion bei dem Hauptdiesel ist größer als der Gewichtsund Raumbedarf, der durch den Elektromotor und seine Stromversorgung entsteht. Sowohl der Elektromotor als auch seine Stromversorgung lassen sich in dem sonst vorhandenen Totraum innerhalb des Maschinenraums unterbringen.

Die Verminderung des Raumbedarfes für den Hauptdieselmotor, verglichen mit einem Antriebssystem, bei dem die Antriebsleistung hauptsächlich durch den langsamlaufenden Dieselmotor zustande kommt, vergrößert bei unveränderten Schiffsabmessungen die Ladekapazität erheblich.

Hinzu kommt, dass die Dieselgeneratoranlage praktisch beliebig im Schiffsrumpf untergebracht werden kann, also auch an Stellen, die zur Aufnahme von Containern oder sonstiger Ladung ohnehin nicht besonders gut geeignet sind.

Aufgrund des Mischantriebs mit der verhältnismäßig hohen elektrischen Antriebsleistung, in Verbindung mit dem Verstellpropeller, besteht nun auch die Möglichkeit bei praktisch allen Betriebssituationen auf einen günstigen Treibstoffverbrauch des Hauptdieselmotors einzuregeln.

Insbesondere besteht die Möglichkeit, die thermische Belastung des Hauptdieselmotors beim Anfahren und Beschleunigen des Schiffs zu beseitigen, was Lebensdauer und dem Wartungsaufwand für den Hauptdieselmotor erheblich zugute kommt.

Das neue Antriebskonzept ist auch dafür geeignet, bestehende Schiffe um- bzw aufzurüsten, ohne den Maschinenraum vergrößern zu müssen.

Beispielsweise kann mit Hilfe dieses Antriebskonzeptes, ein seegehendes Schiff zu einem eisgehenden Schiff oder sogar einem eisbrechenden Cargoschiff umgerüstet werden. Hierzu braucht lediglich der Rumpf an den entsprechenden Bereichen des Bugs und des Schiffsbodens sowie der Flanken für den Eisbetrieb verstärkt zu werden.

Der Hauptdiesel für den oder die Propellerwellen erfordert praktisch keine Änderungen. Insbesondere erfolgt die Leistungssteigerung ohne Vergrößerung des Maschinenraums.

Die Wellenanlage wird entsprechend der größeren Gesamtantriebsleistung aufgerüstet und es wird der zusätzliche Elektroantrieb eingebaut. Der Platzbedarf für den zusätzlichen Elektromotor und die Dieselgeneratoranlage ist gemessen, an dem vorhandenen Totraum im Maschinenraum klein. Die Zusatzeinrichtungen lassen sich in aller Regel mühelos unterbringen.

Das neue Antriebskonzept schafft auch die Möglichkeit, einem bestehenden Container- oder Cargoschiff eine größere Reisegeschwindigkeit zu verleihen. Dazu wird wie vorerwähnt, die Wellenanlage verstärkt, gegebenenfalls der Verstellpropeller nachgerüstet und die Propellerwelle mit dem Elektromotor versehen. Auch hier kann wieder ohne Schwierigkeiten die Dieselgeneratoranlage im Maschinenraum oder an anderer Stelle untergebracht werden.

Ohne Änderungen der Außenabmessungen ist ein so umgerüstetes Schiff in der Lage höhere Reisegeschwindigkeiten bei freier Fahrt zu erzielen.

Wenn es bei einem Cargoschiff nicht darum geht, die Fahrgeschwindigkeit bei freier Fahrt zu erhöhen, sondern das Ladevolumen zu vergrößern, kann auch wiederum das neue Antriebskonzept verwendet werden. Hierzu wird der Schiffsrumpf entsprechend dem gewünschten Volumen verlängert. Der Hauptdiesel bleibt erhalten und wird durch einen Elektroantrieb in der erfindungsgemäßen Weise unterstützt. Eine Vergrößerung des Maschinenraums ist auch hier nicht notwendig, d.h. der Hauptdiesel bleibt an Ort und Stelle. Es genügt die Wellenanlage an das höhere Drehmoment anzupassen, einen Verstellpropeller vorzusehen und die Dieselgeneratoranlage einzubauen.

Ersichtlicher Weise kann jederzeit vergleichsweise leicht eine Aufrüstung in eine der oben genannten Richtungen stattfinden, ohne dass große Eingriffe im Bereich des Maschinenraums und des oder der Hauptdieselmotoren erforderlich wären.

Im übrigen sind Weiterbildungen der Erfindung Gegenstand von Unteransprüchen. Hierbei sollen auch solche Merkmalskombinationen als beansprucht angesehen werden, auf die kein ausdrückliches Ausführungsbeispiel gerichtet ist.

In der Zeichnung ist ein Ausführungsbeispiel des Gegenstandes der Erfindung dargestellt. Es zeigen:
- Fig. 1: ein Schiff, dass mit dem erfindungsgemäßen Hybridantrieb ausgerüstet ist in einem stark schematisiertem Längsschnitt, und
- Fig. 2: das Prinzipschaltbild des erfindungsgemäßen Hybridantriebs.

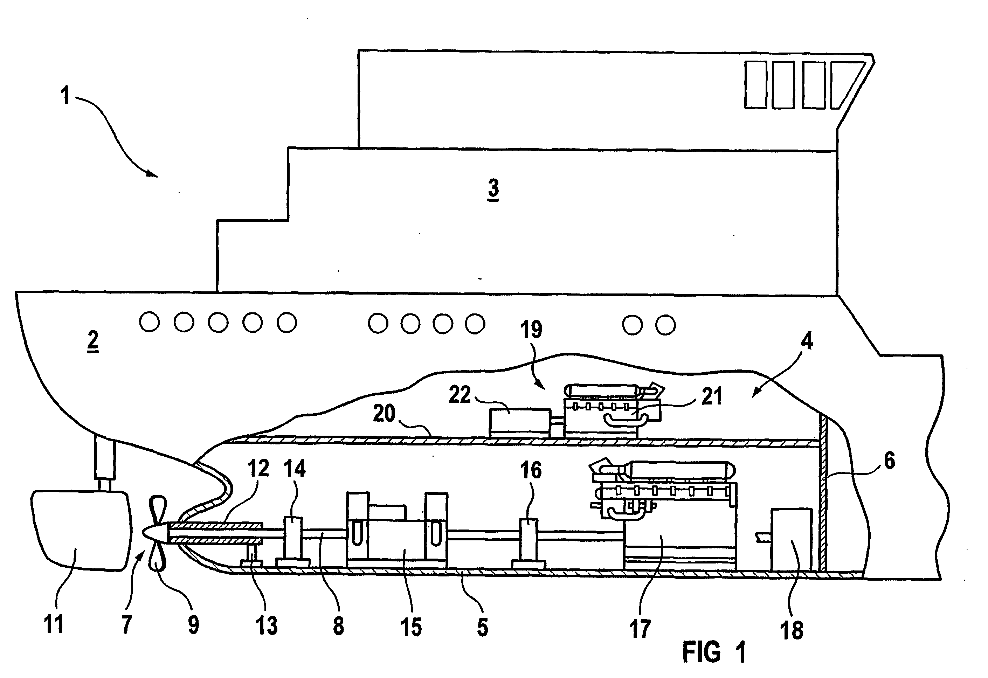

Figur 1 zeigt in einer stark schematisierten Darstellung ein Containerschiff 1 mit einem Schiffsrumpf 2 und Deckaufbauten 3. Der Schiffsrumpf 2 ist im Bereich im Bereich eines Maschinenraumes 4 aufgeschnitten. Die Darstellung ist in keine Weise maßstäblich, sondern dient lediglich dem Zweck das Wesentlichen erkennen zu lassen.

Der Maschinenraum 4 weist einen Maschinenraumboden 5 auf und ist in Richtung zum Schiffsbug durch eine Wand 6 nach vorne abgeschlossen. Den hinteren Abschluss bildet die entsprechende Heckpartie des Schiffes 1. In bekannter Weise ist in einem eingezogenen Bereich des Hecks ein Schiffspropeller 7 angeordnet, der drehfest mit einer Propellerwelle 8 verbunden ist. Der Schiffspropeller 7 ist ein sogenannter Verstellpropeller, d.h. ein Propeller dessen Propellerblätter 9 in der Steigung verstellbar sind. In Strömungsrichtung hinter dem Propeller 9 ist ein Ruder 11 schwenkbar angebracht.

Die Propellerwelle 8 führt durch ein Stevenrohr 12, das im Inneren des Schiffes mittels wenigstens einer Stütze 13 abgestützt ist. Im Anschluss an das Stevenrohr 12 befindet sich ein Radiallager 14, das ebenfalls auf dem Maschinenraumboden 5 befestigt ist und dazu dient, ein Teil der Radialkraft der Schiffswelle 8 aufzunehmen. Im weiteren Verlauf, in Richtung auf den Bug des Schiffes 1 gesehen, ist ein Elektromotor 15 vorhanden, dessen Ankerwelle von der Propellerwelle 8 gebildet ist.

Der Elektromotor 15 kann in einer Synchronmaschine, einer Asynchronmaschine oder einer Gleichstrommaschine bestehen. In jedem Falle handelt es sich um einen langsam laufenden Motor, der vorzugsweise ohne zwischengeschaltetes Getriebe unmittelbar auf die Propellerwelle 8 einwirkt.

Die Propellerwelle 8 wird schließlich noch durch ein weiteres Lager 16 getragen, das ebenfalls auf den Maschinenraumboden 5 befestigt ist. Es nimmt die Axialkräfte und Radialkräfte, also den von den Propeller 7 ausgehenden Schub.

Endseitig ist schließlich an die Propellerwelle 8 ein langsam laufender Hauptdieselmotor 17 angekoppelt, der mit seiner Kurbelwelle entweder unmittelbar oder über ein einstufiges Untersetzungsgetriebe die Propellerwelle 8 antreibt. Der Hauptdieselmotor 17 ist ein Zweitaktdieselmotor und weist typischerweise eine Nennleistung von wenigstens zwischen 8 und 13 MW auf. Der heutige Leistungsbereich endet bei ca 70 MW bei Einzelmotoren für Cargoschiffen.

Zur Verstellung des Schiffspropellers 7 ist ein schematisch dargestellter Verstellantrieb 18 vorgesehen.

Die Stromversorgung des Elektromotors 15 geschieht mit Hilfe eines Dieselgeneratoraggregates 19, das im gezeigten Ausführungsbeispiel auf einem Galerieboden 20 des Maschinenraumes 4 angeordnet ist. Zu dem Dieselgeneratoraggregat 19 gehören ein Dieselmotor 21 sowie ein Stromgenerator 22. Der Dieselmotor 21 ist ein schnelllaufender Dieselmotor der nach dem Viertaktprinzip arbeitet.

Anstelle eines einzelnen Dieselgeneratoraggregates 18 können auch mehrere Dieselgeneratoraggregate verwendet werden, die je nach Leistungsbedarf eingeschaltet werden, um Strom zu liefern.

Der Elektromotor 15 und der Hauptdieselmotor 17 bilden einen Hybridantrieb für den Schiffspropeller 7. Die Nennleistung des Elektromotors 15 liegt bei wenigstens 20 Prozent der Nennleistung, die der Hauptdieselmotor 17 abgeben kann. Das bedeutet, dass bei maximalem Drehmoment an dem Schiffspropeller 7 ca. 20% des Drehmomentes von dem Elektromotor 15 beigesteuert werden, während der Rest von dem Hauptdieselmotor 17 übernommen werden.

Die Darstellung in Fig. 1 ist insoweit nicht maßstäblich als das Volumen des Hauptdieselmotors 17 ungleich viel größer ist als das Volumen des Dieselmotors 21 des Dieselgeneratoraggregates 18, es wäre neben dem Hauptdieselmotor 17 kaum zu erkennen.

Der Elektromotor 15 arbeitet in jeder Betriebsphase des Schiffsantriebes mit und wird insgesamt so gesteuert, dass der Hauptdieselmotor 17 möglichst wenigst thermisch belastet wird und/oder einen möglichst günstigen Treibstoffverbrauch zeigt.

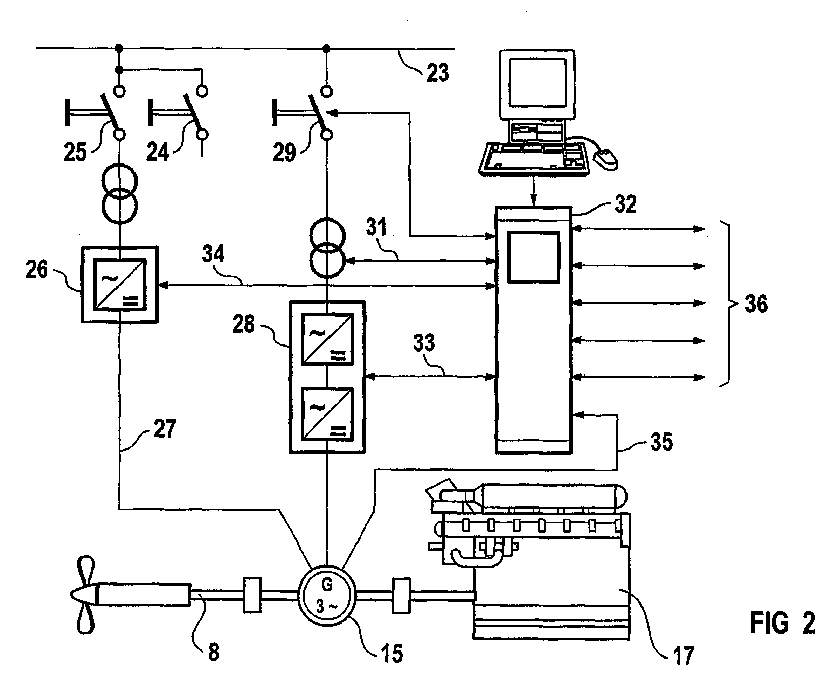

Die elektrische Ausrüstung zum Betrieb des Hybridantriebes ist stark schematisiert in Figur 2 gezeigt.

Das Dieselaggregat 18 speist seine elektrische Energie in ein Elektrische Netz 23 ein. Von dem Netz 23 wird über einen Schalter 24 elektrische Energie für weitere elektrische Einrichtungen abgezweigt. Außerdem ist das Netz 23 über einen Schalter 25 mit einem Umrichter 26 verbunden, der über eine Leitung 27 Erregerenergie für den Elektromotor 15 liefert. Die Feldenergie im Falle einer Synchronmaschine wird über einen Umrichter 28 erzeugt, der ebenfalls über einen Schalter 29 mit dem Netz 23 verbunden ist. Mittels einer Steuerleitung 31 wird der Strom für den Elektromotor 15 am Eingang des Umrichters 28 gemessen und einer zentralen Steuerung 32 zugeleitet.

Die zentrale Steuerung 32 steuert über eine Steuerleitung 33 den Umrichter 28 und über eine Steuerleitung 34 den Umrichter 26. Die zentrale Steuerung 32 erfasst ferner über eine Leitung 35 die Drehzahl des Elektromotors 15, d.h. der Propellerwelle 8.

Ferner ist die zentrale Steuerung 32 über Leitungen 36 mit der Kommandobrücke, einem Alarmsystem, einer Fernwartungseinrichtung und dergleichen mehr verbunden. Die zentrale Steuerung 32 ermittelt außerdem den Treibstoffverbrauch sowohl für den Hauptdieselmotor 17 als auch für das Dieselaggregat 18 und steuert das Gesamtsystem, so dass insgesamt der Treibstoffverbrauch optimiert wird. Schließlicht übernimmt die zentrale Steuerung 32 auch die Kontrolle über Verstellantrieb 18.

Der erfindungsgemäße Hybridantrieb weist verglichen mit dem Hauptdieselmotor 17 einen sehr kleinen Platzbedarf auf. Es ist deswegen möglich, mit Hilfe des erfindungsgemäßen Hybridantriebs bestehende Seeschiffe aufzurüsten. Das Aufrüsten geschieht, ohne dass der Maschinenraum einen größeren Platz beanspruchen würde. Die Zusatzeinrichtungen, wie der Elektromotor 15 und das Dieselaggregat 18, können ohne weiteres in dem Totraum untergebracht werden, der im Maschinenraum vorhanden ist und von dem Hauptdieselmotor 17 nicht ausgenutzt wird.

So es ist es beispielsweise möglich ein bestehendes seegängiges Seeschiff in ein eisgängiges oder sogar eisbrechendes umzurüsten. Hierzu wird die Antriebsenergie aufgestockt, indem zusätzlich mit der jeweiligen Propellerwelle ein Elektromotor gekuppelt wird. Falls nicht bereits vorhanden, wird der Schiffspropeller auf einen Verstellpropeller umgerüstet und es wird das zusätzlich benötigte Dieselgeneratoraggregat eingebaut. Entsprechend der höheren Antriebsleistung müssen gegebenenfalls das Stevenrohr und die Wellenlager verstärkt werden.

Für ein eisgängiges oder eisbrechendes Schiff müssen selbstverständlich auch der Bug, der Schiffsboden im Bugbereich und die Flanken verstärkt werden.

Mit Hilfe des erfindungsgemäßen Hybridantriebskonzeptes ist es auch möglich, nachträglich bei einem bestehenden Schiff die Antriebsleistung zu erhöhen, um zu höheren Fahrgeschwindigkeiten zu gelangen. Hierzu wird das Schiff in der gleichen Weise antriebsmäßig umgerüstet, wie dies bereits oben erläutert ist.

Schließlich ist es denkbar, mit Hilfe des erfindungsgemäßen Hybridantriebs die Antriebsleistung soweit zu steigern, dass eine Vergrößerung bzw. Verlängerung des Schiffsrumpfes möglich ist, um bei gleicher Reisegeschwindigkeit einen größeren Frachtraum zu bekommen.

Das erfindungsgemäße Antriebskonzept ist nicht nur bei Einewellenanlagen möglich, sondern auch bei Mehrwellenanlagen. Es ist darüber hinaus auch denkbar, den Elektromotor nicht unmittelbar auf der Propellerwelle anzuordnen, sondern den Elektromotor über einen Getriebe an die Propellerwelle anzukuppeln. Schließlich ist es denkbar, den Elektromotor mit der Kurbelwelle des Hauptdieselmotors zu kuppeln und zwar an dem Ende, das von der Propellerwelle abliegt.

Wenn zwischen dem Elektromotor und der Propellerwelle ein einstufiges Getriebe geschaltet wird, kann unter Umständen eine noch kleinere elektrische Maschine Verwendung finden. Ein Hybridantrieb setzt sich aus einem Hauptdieselmotor zum Antreiben der Schiffswelle und einem Elektromotor zusammen. Der Elektromotor weist einen Nennleistung auf, die wenigstens 20% der Nennleistung des Hauptdieselmotors ausmacht. Der Elektromotor ist ständig eingeschaltet, und sorgt in Verbindung mit einem Stellpropeller dafür, den Hauptdieselmotor in einem günstigen Betriebspunkt zu halten. Die Kombination des Hauptdieselmotors und elektrischem Antrieb gestattet es insgesamt ökonomischer zu bauen bzw. zu betreiben.

## Patentansprüche

1. Schiffsantriebssystem für Seeschiffe (1), mit wenigstens einem über eine Propellerwelle (8) angetriebenen Schiffspropeller, mit einem langsam laufenden Hauptdieselmotor (17), der eine vorgegebene Nennleistung aufweist und der mit der Propellerwelle (8) gekuppelt ist, um dem Schiffspropeller (7) Leistung zuzuführen, mit einem Elektromotor (15), der eine vorgegebene Nennleistung aufweist und der mit der Propellerwelle (8) gekuppelt ist, um dem Schiffspropeller (9) Leistung zuzuführen, mit einer Stromgeneratoranlage (22) zum Erzeugen von elektrischer Energie für den Elektromotor (15) und mit einer schnell laufenden Dieselanlage (21) zum Antreiben der Stromgeneratoranlage (22), **dadurch gekennzeichnet, dass** die Propellerblätter (9) des Schiffspropellers (7) in ihrer Steigung mittels eines Verstellantriebs (18) verstellbar sind, und dass das Schiffsantriebssystem eine Regeleinrichtung (32) aufweist, mittels der der Elektromotor (15) hinsichtlich des von ihm abgegebenen Drehmoments und der Schiffspropeller (7) so regelbar sind, dass der langsam laufende Hauptdieselmotor (17) möglichst nahe einem vorgebbaren Betriebspunkt betreibbar ist.

2. Schiffantriebssystem nach Anspruch 1, **dadurch gekennzeichnet, dass** eine Regeleinrichtung (32) vorgesehen ist, die dazu dient, den Elektromotor (15) hinsichtlich des von ihm abgegebenen Drehmoments zu regeln, derart, dass der langsam laufende Hauptdieselmotor (17) möglichst nahe einem vorgegeben Betriebspunkt betrieben wird.

3. Schiffantriebssystem nach Anspruch 1 **dadurch gekennzeichnet, dass** der Elektromotor (15) drehmomentgeregelt ist.

4. Schiffantriebssystem nach Anspruch 1 **dadurch gekennzeichnet, dass** die Nennleistung des Elektromotors (15) wenigstens 20 % der Nennleistung des Hauptdieselmotors (17) beträgt.

5. Verfahren zum Betrieb eines Seeschiffes, das mit einem Schiffsantriebssystem nach einem der Ansprüche 1 bis 4 ausgerüstet ist, bei dem bei gegeben beschleunigungsfreier Schiffsgeschwindigkeit der Elektromotor (15) und der Schiffspropeller (7) derart geregelt werden, dass der gesamte Treibstoffbedarf für den langsam laufenden Hauptdieselmotor und die Dieselgeneratoranlage (19) minimal wird.

6. Verfahren zum Aufrüsten der Antriebsleistung eines bestehenden Seeschiffes (1) mit einem Schiffsantriebssystem nach einem der Ansprüche 1 bis 4, mittels wenigstens eines Elektromotors (15), das wenigstens eine Wellenanlage (7, 8, 12, 14) mit einer Propellerwelle (8) zum Antrieb eines Schiffspropellers (7) und wenigstens einen langsam laufenden Hauptdieselmotor (17) zum Antrieb der Propellerwelle (8) aufweist, bei welchem Verfahren ein Elektromotor (15) bereitgestellt wird, der durch den Elektromotor (15) ergänzt werden soll, bei dem eine Dieselgeneratoranlage (19) eingebaut wird, bei dem die Wellenanlage (7, 8, 12, 14) an die Gesamtleistung aus Elektromotor (15) und langsam laufenden Hauptdieselmotor (17) angepasst wird, und bei dem eine elektrische Steuer- und Regeleinrichtung (32) eingebaut wird, um das von dem Elektromotor (15) an die Propellerwelle (8) abzugebende Drehmoment zu kontrollieren.

7. Verfahren zum Aufrüsten eines Seeschiffes mit einem Schiffsantriebssystem nach einem der Ansprüche 1 bis 4, bei dem der Schiffsrumpf (2) verstärkt wird, um das Seeschiff eisgängig zu machen.

8. Verfahren zum Aufrüsten eines Seeschiffes mit einem Schiffsantriebssystem nach einem der Ansprüche 1 bis 4, bei dem der Schiffspropeller (7) durch einen Schiffspropeller (7) ersetzt wird, dessen Propellerblätter (9) verstellbar sind und ein Verstellantrieb (18) für die Propellerblätter (9) eingebaut wird.

## Claims

1. Vessel propulsion system for seagoing vessels (1), having at least one vessel propeller which is driven via a propeller shaft (8), having a slow-running main diesel engine (17) which has a predetermined rated power and which is coupled to the propeller shaft (8) in order to supply power to the vessel propeller (7), having an electric motor (15) which has a predetermined rated power and which is coupled to the propeller shaft (8) in order to supply power to the vessel propeller (9), having an electricity generator system (22) for producing electrical power for the electric motor (15), and having a fast-running diesel system (21) for driving the electricity generator system (22), **characterized in that** the pitch of the propeller blades (9) of the vessel propeller (7) can be varied by means of a control drive (18), and **in that** the vessel propulsion system has a control device (32), by means of which the torque which is to be emitted from the electric motor (15) and the vessel propeller (7) can be controlled such that the slow-running main diesel engine (17) can be operated as close as possible to an operating point which can be predetermined.

2. Vessel propulsion system according to Claim 1, **characterized in that** a control device (32) is provided in order to control the torque which is emitted from the electric motor (15) such that the slow-running main diesel engine (17) is operated as close as possible to a predetermined operating point.

3. Vessel propulsion system according to Claim 1, **characterized in that** the electric motor (15) is torque-controlled.

4. Vessel propulsion system according to Claim 1, **characterized in that** the rated power of the electric motor (15) is at least 20% of the rated power of the main diesel engine (17).

5. Method for operating a seagoing vessel which is equipped with a vessel propulsion system according to one of Claims 1 to 4, in which, at a given vessel speed without any acceleration, the electric motor (15) and the vessel propeller (7) are controlled such that the total fuel requirement for the slow-running main diesel engine and for the diesel generator system (19) is minimized.

6. Method for increasing the propulsion power of an existing seagoing vessel (1) having a vessel propulsion system according to one of Claims 1 to 4, by means of at least one electric motor (15), which has at least one shaft system (7, 8, 12, 14) with a propeller shaft (8) for driving a vessel propeller (7) and has at least one slow-running main diesel engine (17) for driving the propeller shaft (8), in which method an electric motor (15) is provided, which is intended to be supplemented by the electric motor (15), in which a diesel generator system (19) is installed, in which the shaft system (7, 8, 12, 14) is matched to the total power of the electric motor (15) and of the slow-running main diesel engine (17), and in which an electrical control and regulation device (32) is installed, in order to control the torque which is to be emitted from the electric motor (15) to the propeller shaft (8).

7. Method for upgrading a seagoing vessel with a vessel propulsion system according to one of Claims 1 to 4, in which the vessel's hull (2) is reinforced in order to make the seagoing vessel capable of passing through ice.

8. Method for upgrading a seagoing vessel with a vessel propulsion system according to one of Claims 1 to 4, in which the vessel propeller (7) is replaced by a vessel propeller (7) whose propeller blades (9) are controllable, and a control drive (18) is installed for the propeller blades (9).

## Revendications

1. Système d'entraînement de navire destiné à des navires hauturiers (1), comportant
au moins une hélice entraînée par un arbre d'hélice (10),
un moteur diesel principal à petite vitesse (17) qui a une puissance nominale prédéterminée et qui est couplé à l'arbre d'hélice (8) afin d'apporter de la puissance à l'hélice (7) du navire,
un moteur électrique (15) qui a une puissance nominale prédéterminée et qui est couplé à l'arbre d'hélice (8) afin d'apporter de la puissance à l'hélice (9) du navire,
un groupe électrogène (22) destiné à générer de l'énergie électrique destinée au moteur électrique (15) et
un groupe diesel à grande vitesse (21) destiné à entraîner le groupe électrogène (22),
**caractérisé en ce que** le pas des pales (9) de l'hélice (7) du navire est réglable au moyen d'un entraînement de réglage (18) et **en ce que** le système d'entraînement d'hélice comporte un dispositif de régulation (32) permettant de réguler le couple de rotation généré par le moteur électrique (15) et l'hélice (7) du navire de façon à pouvoir faire fonctionner le moteur diesel principal à petite vitesse (17) aussi près que possible d'un point de fonctionnement prédéterminé.

2. Système d'entraînement de navire selon la revendication 1, **caractérisé en ce qu'**il est prévu un système de régulation (32) qui sert à réguler le couple de rotation généré par le moteur électrique (15) de façon à faire fonctionner le moteur diesel principal à petite vitesse (17) aussi près que possible d'un point de fonctionnement prédéterminé.

3. Système d'entraînement de navire selon la revendication 1, **caractérisé en ce que** le couple de rotation du moteur électrique (15) est régulé.

4. Système d'entraînement de navire selon la revendication 1, **caractérisé en ce que** la puissance nominale du moteur électrique (15) est égale au moins à 20% de la puissance nominale du moteur diesel principal.

5. Procédé de fonctionnement d'un navire hauturier qui est équipé d'un système d'entraînement de navire selon l'une des revendications 1 à 4, dans lequel le moteur électrique (15) et l'hélice (7) du navire sont régulés à une vitesse de navire donnée dépourvue d'accélération de sorte que le besoin total en carburant pour le moteur diesel principal à petite vitesse et le groupe diesel-électrogène (19) est minimal.

6. Procédé d'augmentation de la puissance d'entraînement d'un navire hauturier existant (1) comportant un système d'entraînement de navire selon l'une des revendications 1 à 4, au moyen d'au moins un moteur électrique (15) qui comporte au moins une installation d'arbres (7, 8, 12, 14) comportant un arbre d'hélice (8) destiné à entraîner une hélice de navire (16) et au moins un moteur diesel principal à petite vitesse (17) destiné à entraîner l'arbre d'hélice (8), procédé dans lequel on dispose d'un moteur électrique (15) qui peut être complété par le moteur électrique (15) dans lequel est incorporé un groupe diesel-électrogène (19), dans lequel l'installation d'arbres (7, 8, 12, 14) est adaptée à la puissance totale générée par le moteur électrique (15) et le moteur diesel principal à petite vitesse (17) et dans lequel est incorporé un dispositif de commande et de régulation électrique (32) afin de contrôler le couple de rotation qui doit être transféré du moteur électrique (15) à l'arbre d'hélice (8).

7. Procédé d'installation dans un navire hauturier d'un système d'entraînement de navire selon l'une des revendications 1 à 4, dans lequel la coque (2) du navire est renforcée afin de rendre le navire hauturier apte à affronter la glace.

8. Procédé d'installation dans un navire hauturier d'un système d'entraînement de navire selon l'une des revendications 1 à 4, dans lequel l'hélice (7) du navire est remplacée par une hélice de navire (7) dont les pales (9) sont réglables et dans lequel est incorporé un entraînement (18) de réglage des pales (9) de l'hélice.
